(19) Europäisches Patentamt
European Patent Office
Office européen des brevets

(11) **EP 3 141 928 A1**

(12) **EUROPÄISCHE PATENTANMELDUNG**

(43) Veröffentlichungstag:
**15.03.2017  Patentblatt 2017/11**

(21) Anmeldenummer: **16179609.9**

(22) Anmeldetag: **15.07.2016**

(51) Int Cl.:
**G01S 15/93** (2006.01)     **G01S 15/10** (2006.01)
**G01S 15/46** (2006.01)     **G01S 15/58** (2006.01)
**G01S 15/87** (2006.01)     G01S 7/02 (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **11.09.2015  DE 102015217360**

(71) Anmelder: **ROBERT BOSCH GMBH**
**70442 Stuttgart (DE)**

(72) Erfinder: **Karl, Matthias**
**76275 Ettlingen (DE)**

(54) **VERFAHREN ZUM ERMITTELN EINER LAGE EINES OBJEKTES MITTELS AKUSTISCHER SENSOREN**

(57)     Die vorliegende Erfindung offenbart ein Verfahren zum Ermitteln einer Lage eines Objektes umfassend ein Aussenden eines akustischen Messsignals, ein Empfangen eines ersten Echos des Messsignals mittels eines ersten akustischen Sensors (2a) und ein Umsetzen des von dem ersten akustischen Sensor (2a) empfangenen ersten Echos des Messsignals in ein erstes elektrisches Empfangssignal, ein Empfangen eines zweiten Echos des Messsignals mittels eines zweiten akustischen Sensors (2b) und ein Umsetzen des von dem zweiten akustischen Sensor (2b) empfangenen zweiten Echos des Messsignals in ein zweites elektrisches Empfangssignal, ein Erzeugen einer ersten Kreuzkorrelationsfunktion, welche eine Korrelation zwischen dem ersten elektrischen Empfangssignal und dem zweiten elektrischen Empfangssignal darstellt, ein Ermitteln eines Maximums der ersten Kreuzkorrelationsfunktion, und ein Ermitteln einer Raumrichtung, die eine Lage des Objektes gegenüber den akustischen Sensoren (2a, 2b) beschreibt, basierend auf einer Lage des Maximums in der ersten Kreuzkorrelationsfunktion.

Fig. 1

EP 3 141 928 A1

**Beschreibung**

Stand der Technik

Die vorliegende Erfindung betrifft ein Verfahren zum Ermitteln einer Lage eines Objektes mittels akustischer Sensoren.

Akustische Sensoren werden insbesondere im Bereich einer Umfelderfassung von Fahrzeugen genutzt. Dabei werden typischerweise Ultraschallsensoren eingesetzt, um eine Lage von Objekten zu erfassen.

Von den akustischen Sensoren werden Messsignale ausgesendet und Echos des Messsignals, welche an den Objekten reflektiert wurden, empfangen. Dabei stellt sich zumeist das Problem, dass ausgesandte Messsignale nicht nur an einem Punkt in der Fahrzeugumgebung reflektiert werden, sondern von mehreren Punkten zurückgeworfen werden. Es kommt somit zu einer Überlagerung von Signalanteilen des Messsignals, welche an unterschiedlichen Punkten in der Fahrzeugumgebung reflektiert wurden. Das ursprünglich ausgesendete Messsignal kommt somit stark verändert als reflektiertes Messsignal zu dem aussendenden akustischen Sensor zurück.

Um ein reflektiertes Messsignal dennoch korrekt zu detektieren wird dieses üblicherweise mit einem Referenzsignal verglichen, welches charakteristisch für ein reflektiertes Messsignal ist. Dies erfolgt beispielsweise indem eine Kreuzkorrelation zwischen dem Referenzsignal und dem reflektierten Messsignal errechnet wird.

Verfahren zum Ermitteln einer Lage von Objekten in einer Fahrzeugumgebung mittels akustischer Sensoren weisen jedoch den Nachteil auf, dass deren örtliche Auflösung sehr gering ist oder eine Reichweite, in der die Lage der Objekte ermittelt werden kann, sehr gering ist. Dies ist unter anderem auch dadurch begründet, dass die Messsignale benachbarter akustischer Sensoren einander beeinflussen.

Offenbarung der Erfindung

Das erfindungsgemäße Verfahren zum Ermitteln einer Lage eines Objektes umfasst ein Aussenden eines akustischen Messsignals, ein Empfangen eines ersten Echos des Messsignals mittels eines ersten akustischen Sensors und ein Umsetzen des von dem ersten akustischen Sensors empfangenen Echos des Messsignals in ein erstes elektrisches Empfangssignal, ein Empfangen eines zweiten Echos des Messsignals mittels eines zweiten akustischen Sensors und ein Umsetzen des von dem zweiten akustischen Sensor empfangenen zweiten Echos des Messsignals in ein zweites elektrisches Empfangssignal, ein Erzeugen einer ersten Kreuzkorrelationsfunktion, welche eine Korrelation zwischen dem ersten elektrischen Empfangssignal und dem zweiten elektrischen Empfangssignal darstellt, ein Ermitteln eines Maximums der ersten Kreuzkorrelationsfunktion, und ein Ermitteln einer Raumrichtung, die eine Lage des Objektes gegenüber den akustischen Sensoren beschreibt, basierend auf einer Lage des Maximums in der ersten Kreuzkorrelationsfunktion.

Es wird somit ein besonders zuverlässiges Verfahren zum Ermitteln einer Lage eines Objektes mittels akustischer Sensoren geschaffen. Unabhängig davon, wie das Messsignal bei seiner Reflexion an dem Objekt verändert wird, können Echos des Messsignals, welche einen ähnlichen Laufweg beschritten haben, als einander zugehörig erkannt werden. Damit kann eine Laufzeitdifferenz für das Messsignal ermittelt werden. Durch das erfindungsgemäße Verfahren wird zudem ein Ermitteln einer Lage eines Objektes über eine besonders große Distanz ermöglicht, ohne eine Sendeleistung für das Aussenden des akustischen Messsignals zu erhöhen oder eine Empfindlichkeit der akustischen Sensoren zu steigern. Zunehmende Störungen werden durch das Erzeugen der ersten Kreuzkorrelationsfunktion kompensiert.

Die Unteransprüche zeigen bevorzugte Weiterbildungen der Erfindung.

Bevorzugt umfasst das Verfahren ferner ein Bestimmen einer Zeitdauer zwischen dem Aussenden des Messsignals und dem Empfangen der Echos des

Messsignals durch den ersten und/oder den zweiten akustischen Sensor, und ein Ermitteln eines Abstandes des Objektes gegenüber den akustischen Sensoren basierend auf der Zeitdauer. Auf diese Weise kann die Lage des Objektes genauer bestimmt werden. Insbesondere wird die Zeitdauer basierend auf der Lage des Maximums in der ersten Kreuzkorrelationsfunktion ermittelt. Somit wird ein besonders zuverlässiges und robustes Verfahren geschaffen.

Auch ist es vorteilhaft, wenn bei dem Erzeugen der ersten Kreuzkorrelationsfunktion eine Korrelationsdauer gewählt wird, die größer als eine Dauer des Messsignals ist. Auf diese Weise können besonders weit entfernte Objekte präzise erfasst werden. Dies ist insbesondere darin begründet, dass bei weit entfernten Objekten eine besonders starke Verzerrung des Messsignals erfolgt, bevor dieses als Echo des Messsignals die akustischen Sensoren erreicht.

Ferner ist es vorteilhaft, wenn bei dem Erzeugen der ersten Kreuzkorrelationsfunktion diese aus Teilabschnitten der ersten Kreuzkorrelationsfunktion zusammengefügt wird, wobei die Teilabschnitte eine geringere Korrelationsdauer aufweisen als die erste Kreuzkorrelationsfunktion. Auf diese Weise kann ein Rechenaufwand bei dem Erzeugen der ersten Kreuzkorrelationsfunktion besonders gering gehalten werden.

Ebenso vorteilhaft ist es, wenn eine Korrelationsdauer der ersten Kreuzkorrelationsfunktion abhängig von einer Laufzeit zwischen dem Aussenden des Messsignals und dem Empfangen der Echos des Messsignals durch den ersten und/oder den zweiten akustischen Sensor ist. Insbesondere steigt die Korrelationsdauer dabei an, bis ein Echo des Messsignals empfangen wird oder bis ein vorgegebenes Zeitintervall abgelaufen ist. Auf diese Weise wird das Verfahren optimal an eine tatsächliche Lage des Objektes angepasst. Ein Rechenaufwand und eine Verfahrenslaufzeit werden abhängig von der aktuellen Fahrzeugumgebung minimiert.

Auch ist es vorteilhaft, wenn das Verfahren ferner ein Bestimmen einer Dopplerverschiebung des akustischen Messsignals basierend auf dem ersten und/oder zweiten elektrischen Empfangssignal umfasst, und ein Ermitteln einer Relativgeschwindigkeit des Objektes gegenüber den akustischen Sensoren basierend auf der Dopplerverschiebung umfasst. Auf diese Weise wird es ermöglicht, dass auch eine Bewegung des Objektes ermittelt wird. Insbesondere wird bei dem Ermitteln der Relativgeschwindigkeit auch eine Eigenbewegung der akustischen Sensoren berücksichtigt.

Auch ist es vorteilhaft, wenn die Dopplerverschiebung des akustischen Messsignals durch einen Vergleich mit einem Referenzsignal ermittelt wird. Dazu wird insbesondere eine Korrelation zwischen dem ersten und/oder zweiten Echo des Messsignals und dem Referenzsignal gebildet. Weiter bevorzugt erfolgt ein Vergleich mit mehreren Referenzsignalen, wobei jedes der Referenzsignale eine bestimmte Dopplerverschiebung andeutet. Somit werden die Dopplerverschiebung und damit auch die Relativgeschwindigkeit des Objektes besonders zuverlässig ermittelt.

Weiter bevorzugt erfolgt in dem Verfahren ein Empfangen eines dritten Echos des Messsignals mittels eines dritten akustischen Sensors und ein Umsetzen des von dem dritten akustischen Sensor empfangenen dritten Echos in ein drittes elektrisches Empfangssignal, ein Erzeugen einer zweiten Kreuzkorrelationsfunktion, welche eine Korrelation zwischen dem ersten elektrischen Empfangssignal und dem dritten elektrischen Empfangssignal darstellt, ein Erzeugen einer dritten Kreuzkorrelationsfunktion, welche eine Korrelation zwischen dem zweiten elektrischen Empfangssignal und dem dritten elektrischen Empfangssignal darstellt, ein Ermitteln jeweils eines Maximums in der ersten bis dritten Kreuzkorrelationsfunktion, und ein Ermitteln einer Raumrichtung, die eine Lage des Objektes gegenüber den akustischen Sensoren beschreibt, basierend auf einer Lage der Maxima der ersten bis dritten Kreuzkorrelationsfunktion. Auf diese Weise wird es ermöglicht, die Raumrichtung, die die Lage des Objektes gegenüber den akustischen Sensoren beschreibt, besonders genau zu ermitteln. Insbesondere sind der erste bis dritte akustische Sensor dabei derart zueinander angeordnet, dass diese in ihrer Anordnung ein Dreieck aufspannen. Auf diese Weise wird es ermöglicht, die Raumrichtung, die die Lage des Objektes gegenüber den akustischen Sensoren beschreibt, in einem dreidimensionalen Raum zu beschreiben.

Ferner ist es vorteilhaft, wenn das Aussenden des akustischen Messsignals ein Aussenden eines ersten Messsignals aus einer ersten Position und ein Aussenden eines zweiten Messsignals aus einer zweiten Position umfasst, bei dem Empfangen des ersten Echos des Messsignals mittels des ersten akustischen Sensors das empfangene erste Echo des Messsignals bezüglich des ersten Messsignals gefiltert wird, um das erste elektrische Empfangssignal zu beziehen und das empfangene erste Echo des Messsignals bezüglich des zweiten Messsignals gefiltert wird, um ein zusätzliches erstes elektrisches Empfangssignal zu beziehen, bei dem Empfangen des zweiten Echos des Messsignals mittels des zweiten akustischen Sensors, das empfangene zweite Echo des Messsignals bezüglich des ersten Messsignals gefiltert wird, um das zweite elektrische Empfangssignal zu beziehen und das empfangene zweite Echo des Messsignals bezüglich des zweiten Messsignals gefiltert wird, um ein zusätzliches zweites elektrisches Empfangssignal zu beziehen, bei dem Erzeugen der ersten Kreuzkorrelationsfunktion zusätzliche ein Erzeugen einer zusätzlichen ersten Kreuzkorrelationsfunktion erfolgt, welche eine Korrelation zwischen dem zusätzlichen ersten elektrischen Empfangssignal und dem zusätzlichen zweiten elektrischen Empfangssignal darstellt, bei dem Ermitteln des Maximums der ersten Kreuzkorrelationsfunktion auch ein Maximum der zusätzlichen ersten Kreuzkorrelationsfunktion ermittelt wird, und das Ermitteln der Raumrichtung basierend auf einer Lage der Maxima in der ersten Kreuzkorrelationsfunktion und der zusätzlichen ersten Kreuzkorrelationsfunktion erfolgt. Insbesondere weist das erste Messsignal dabei einen anderen Frequenzbereich auf als das zweite Messsignal. Auf diese Weise wird die Robustheit des Verfahrens weiter erhöht. Störeinflüsse, welche bestimmte Frequenzbereiche betreffen werden kompensiert.

Ebenso vorteilhaft ist eine akustische Messvorrichtung, die dazu eingerichtet ist, das erfindungsgemäße Verfahren auszuführen. Eine solche akustische Messvorrichtung weist alle Vorteile des erfindungsgemäßen Verfahrens auf.


Kurze Beschreibung der Zeichnungen

Nachfolgend werden Ausführungsbeispiele der Erfindung unter Bezugnahme auf die begleitende Zeichnung im Detail beschrieben. In der Zeichnung ist:

Figur 1   eine Darstellung eines Fahrzeuges mit einer akustischen Messvorrichtung, die dazu geeignet ist, das erfindungsgemäße Verfahren gemäß einer ersten Ausführungsform auszuführen,

Figur 2   ein Flussdiagramm, welches einen Ablauf des erfindungsgemäßen Verfahrens gemäß der ersten Ausführungsform darstellt,

Figur 3    ein Diagramm, welches einen Zusammenhang zwischen möglichen Maxima einer Kreuzkorrelationsfunktion und einer Raumrichtung darstellt, und

Figur 4    eine vorteilhafte Schaltungsanordnung zum Ermitteln von Korrelationswerten der Kreuzkorrelationsfunktion.

Ausführungsformen der Erfindung

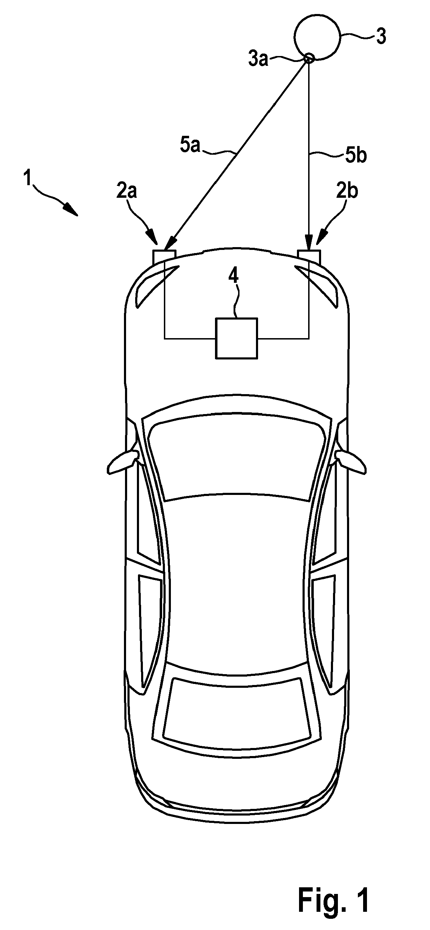

Figur 1 zeigt eine Darstellung eines Fahrzeuges 1 mit einer akustischen Messvorrichtung, die dazu geeignet ist, das erfindungsgemäße Verfahren gemäß einer ersten Ausführungsform auszuführen. Die akustische Messvorrichtung umfasst einen ersten akustischen Sensor 2a, einen zweiten akustischen Sensor 2b und eine Recheneinheit 4. Der erste akustische Sensor 2a ist an einer linken Seite einer Fahrzeugfront des Fahrzeuges 1 angeordnet. Der zweite akustische Sensor 2b ist an einer rechten Seite der Fahrzeugfront des Fahrzeuges 1 angeordnet. Der erste akustische Sensor 2a und der zweite akustische Sensor 2b sind somit an unterschiedlichen Positionen an dem Fahrzeug 1 angeordnet. Der erste akustische Sensor 2a und der zweite akustische Sensor 2b sind über jeweils eine Sensorleitung mit der Recheneinheit 4 verbunden. Die Recheneinheit 4 ist dazu geeignet, einen Ablauf des erfindungsgemäßen Verfahrens zu steuern.

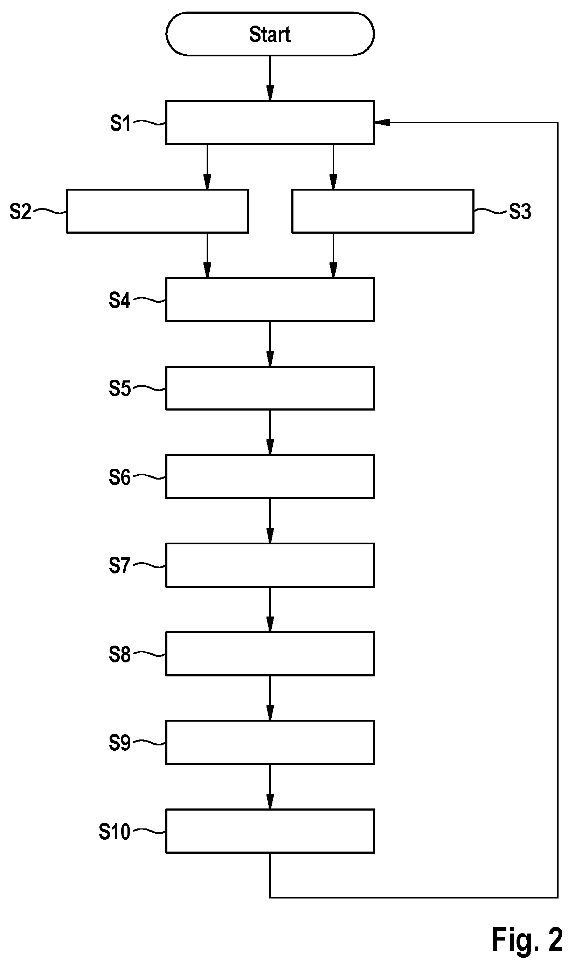

Figur 2 zeigt ein Flussdiagramm, welches einen Ablauf des erfindungsgemäßen Verfahrens gemäß der ersten Ausführungsform darstellt. Das Verfahren wird gestartet, sobald die akustische Messvorrichtung in Betrieb genommen wird.

Nach dem Start des Verfahrens wird ein erster Verfahrensschritt S1 ausgeführt. In dem ersten Verfahrensschritt S1 erfolgt ein Aussenden eines akustischen Messsignals. Das akustische Messsignal wird dabei von einem an dem Fahrzeug 1 angeordneten Sensor ausgesendet. In dieser ersten Ausführungsform wird das akustische Signal von dem ersten akustischen Sensor 2a oder dem zweiten akustischen Sensor 2b ausgesendet.

In der ersten Ausführungsform ist der akustische Sensor 2a und der zweite akustische Sensor 2b jeweils ein Ultraschallsensor. Somit ist das akustische Messsignal ein Ultraschallsignal. Das akustische Messsignal kann dabei eine gleichbleibende oder eine wechselnde Frequenz, beispielsweise in Form eines Chirps, aufweisen.

Nach dem ersten Verfahrensschritt S1 werden zeitgleich ein zweiter Verfahrensschritt S2 und ein dritter Verfahrensschritt S3 ausgeführt.

In dem zweiten Verfahrensschritt S2 erfolgen ein Empfangen eines ersten Echos des Messsignals mittels des ersten akustischen Sensors 2a und ein Umsetzen des von dem ersten akustischen Sensor 2a empfangenen ersten Echos des Messsignals in ein erstes elektrisches Empfangssignal.

In dem dritten Verfahrensschritt S3 erfolgen ein Empfangen eines zweiten Echos des Messsignals mittels des zweiten akustischen Sensors 2b und ein Umsetzen des von dem zweiten akustischen Sensor 2b empfangenen zweiten Echos des Messsignals in ein zweites elektrisches Empfangssignal.

Das akustische Messsignal, welches von einem an dem Fahrzeug 1 angeordneten akustischen Sensor ausgesandt wurde, wird an verschiedenen Objekten, die sich in einer Umgebung des Fahrzeuges 1 befinden, reflektiert. In Figur 1 ist dies beispielhaft für ein Objekt 3 dargestellt, welches sich vor dem Fahrzeug 1 befindet. Trifft das akustische Messsignal auf das Objekt 3, so wird dieses in Richtung des Fahrzeuges 1 zurückgeworfen. Dieses zurückgeworfene Messsignal bildet die Echos des Messsignals.

Trifft das erste Echo des Messsignals auf den ersten akustischen Sensor 2a, so wird durch diesen das reflektierte Messsignal, also das erste Echo, in ein elektrisches Signal umgesetzt. Dieses elektrische Signal des ersten akustischen Sensors 2a ist das erste elektrische Empfangssignal und wird an die Recheneinheit 4 übertragen. Trifft das zweite Echo des Messsignals auf den zweiten akustischen Sensor 2b, so wird durch diesen das reflektierte Messsignal, also das zweite Echo, ebenfalls in ein elektrisches Signal umgesetzt. Dieses elektrische Signal des zweiten akustischen Sensors 2b ist das zweite elektrische Empfangssignal und wird an die Recheneinheit 4 übertragen.

Es wird somit jeweils ein Echo des Messsignals von dem ersten akustischen Sensor 2a als auch von dem zweiten akustischen Sensor 2b empfangen und jeweils in ein elektrisches Empfangssignal umgesetzt. Im weiteren Verlauf des Verfahrens werden diese Empfangssignale ausgewertet.

Nach dem ersten Verfahrensschritt S2 und dem dritten Verfahrensschritt S3 wird ein vierter Verfahrensschritt S4 ausgeführt. In dem vierten Verfahrensschritt S4 erfolgt ein Erzeugen einer ersten Kreuzkorrelationsfunktion, welche eine Korrelation zwischen dem ersten elektrischen Empfangssignal und dem zweiten elektrischen Empfangssignal darstellt. Die erste Kreuzkorrelationsfunktion wird dabei durch eine entsprechende Signalverarbeitung in der Recheneinheit 4 erzeugt oder wird mathematisch bestimmt, nachdem das erste elektrische Empfangssignal und das zweite elektrische Empfangssignal von der Recheneinheit 4 in eine mathematische Darstellung umgewandelt wurden. Mit der ersten Kreuzkorrelationsfunktion wird eine Funktion erzeugt, die eine Ähnlichkeit zwischen dem ersten elektrischen Empfangssignal und dem zweiten elektrischen Empfangssignal darstellt.

In dieser ersten Ausführungsform ist bei dem Erzeugen der ersten Kreuzkorrelationsfunktion eine Korrelationsdauer gewählt, die größer als eine Dauer des Messsignals ist. Mit der Korrelationsdauer wird definiert, über welchen Zeitbereich das erste elektrische Empfangssignal mit dem zweiten elektrischen Empfangssignal verglichen wird. Die Dauer des Messsignals ist dabei ein Zeitraum, in dem das Aussenden des akustischen Messsignals erfolgt.

Auf diese Weise können Echos des Messsignals, welche an Objekten reflektiert wurden, die besonders weit von dem Fahrzeug 1 entfernt sind, besonders gut ausgewertet werden. Ist das Objekt 3, an welchem das Messsignal reflektiert wurde, beispielsweise weiter als 5 Meter von den akustischen Sensoren 2a, 2b entfernt, so kann sich ein beispielhaftes Messsignal von 1,6 ms Dauer bei seinem Aussenden über einen Laufzeitbereich von 3 Metern erstrecken. Bei dem Empfangen der Echos dieses beispielhaften Messsignals kann sich dieses auf eine Dauer von 18 ms ausgedehnt haben. In diesem Beispiel ist es folglich vorteilhaft, wenn die Korrelationsdauer über 1,6 ms liegt und insbesondere in einem Bereich über 18 ms liegt. Die Korrelationsdauer könnte bspw. 20 ms betragen.

Die Korrelationsdauer kann abhängig von einem Abstand zwischen einem erfassten Objekt und dem Fahrzeug 1 optimiert werden, da eine Dauer des reflektierten Messsignals von diesem Abstand abhängig ist. Daher ist in alternativen Ausführungsformen die Korrelationsdauer der ersten Kreuzkorrelationsfunktion abhängig von einer Laufzeit zwischen dem Aussenden des Messsignals und dem Empfangen der Echos des Messsignals durch den ersten und/oder den zweiten akustischen Sensor 2a, 2b. So könnte bspw. eine Dauer des Empfangens der Echos des Messsignals durch den ersten akustischen Sensor 2a und den zweiten akustischen Sensor 2b und das entsprechende Umsetzen in das erste elektrische Empfangssignal und das zweite elektrische Empfangssignal entsprechend eines zuvor ermittelten Abstands zu dem Objekt 3 gewählt werden, welcher bei einem früheren Durchlauf des erfindungsgemäßen Verfahrens ermittelt wurde.

Mit Hinblick auf die Anordnung der akustischen Sensoren 2a, 2b an dem Fahrzeug 1, weisen diese zumindest ein Zehntel des Abstandes zu dem Objekt gegeneinander auf. Soll die akustische Messvorrichtung also auf eine Reichweite von 5 Meter optimiert werden, sind die akustischen Sensoren 2a, 2b also weiter als 50 cm voneinander beabstandet.

Nach dem vierten Verfahrensschritt S4 wird ein fünfter Verfahrensschritt S5 ausgeführt. In dem fünften Verfahrensschritt S5 erfolgt ein Ermitteln eines Maximums der ersten Kreuzkorrelationsfunktion. Das Maximum kann mittels einer mathematischen Verarbeitung der Kreuzkorrelationsfunktion ermittelt werden. So kann bspw. eine Ableitung der Kreuzkorrelationsfunktion auf Nullstellen hin untersucht werden.

Nach dem fünften Verfahrensschritt S5 wird ein sechster Verfahrensschritt S6 ausgeführt. In dem sechsten Verfahrensschritt S6 erfolgt ein Ermitteln einer Raumrichtung, die eine Lage des Objektes gegenüber den akustischen Sensoren beschreibt, basierend auf einer Lage des Maximums in der ersten Kreuzkorrelationsfunktion. Das Maximum der ersten Kreuzkorrelationsfunktion beschreibt einen Laufzeitunterschied, den das reflektierte akustische Messsignal auf seinem Weg zu dem ersten akustischen Sensor 2a gegenüber seinem Weg zu dem zweiten akustischen Sensor 2b aufweist. Dies ist beispielhaft in Figur 1 gezeigt. Das akustische Messsignal wurde an einem Punkt 3a des Objektes 3 reflektiert und folgt einem ersten Weg 5a zu dem ersten akustischen Sensor 2a und folgt einem zweiten Weg 5b zu dem zweiten akustischen Sensor. Da der erste Weg 5a länger als der zweite Weg 5b ist, weist das reflektierte akustische Messsignal unterschiedliche Laufzeiten auf diesen Wegen auf. Dies schlägt sich auch in der ersten Kreuzkorrelationsfunktion nieder. In Figur 1 ist beispielhaft erkenntlich, dass das Objekt 3 näher an dem zweiten akustischen Sensor liegt, da der zweite Weg 5b kürzer als der erste Weg 5a ist.

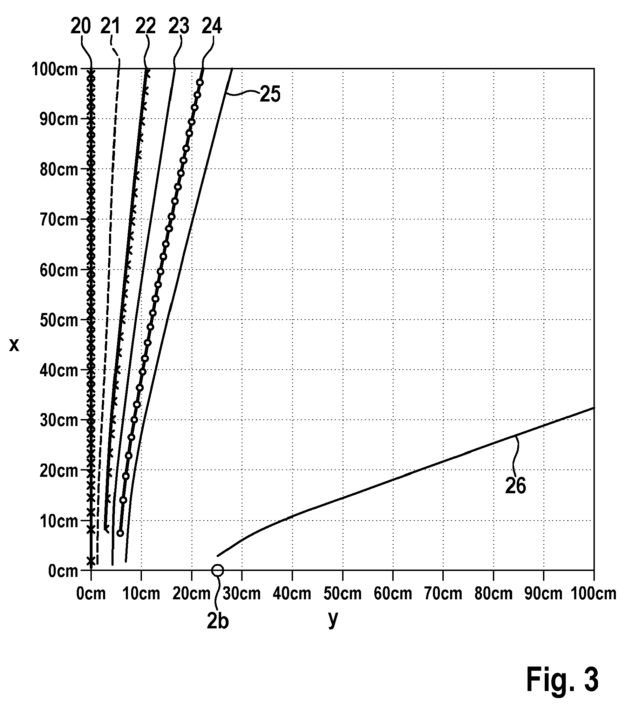

Figur 3 zeigt ein Diagramm, welches einen Zusammenhang zwischen möglichen Maxima der Kreuzkorrelationsfunktion und einer Raumrichtung darstellt. Die X-Achse und die Y-Achse des Diagramms spannen eine Fläche auf, die ein Umfeld der akustischen Sensoren repräsentiert. Der Ursprung des Diagramms ist dabei ein Punkt, der exakt zwischen dem ersten akustischen Sensor 2a und dem zweiten akustischen Sensor 2b liegt. In dem Diagramm sind mehrere Kurven 20 bis 26 dargestellt. Jede der Kurven 20 bis 26 steht für jeweils eine Lage eines Maximums in der ersten Kreuzkorrelationsfunktion.

Eine erste Kurve 20 verläuft entlang der X-Achse. Für die erste Kurve 20 gilt, dass eine Verzögerung m zwischen einem Empfangen des ersten Echos des Messsignals an dem ersten akustischen Sensor 2a und dem Empfangen des zweiten Echos des Messsignals an dem zweiten akustischen Sensor 2b gleich 0 ms ist. Das Objekt liegt somit genau zwischen dem ersten akustischen Sensor und dem zweiten akustischen Sensor. Es liegt somit auf einer Geraden, die bei einem Y-Wert von 0 cm entlang der X-Achse läuft. Es ist ersichtlich, dass noch keine exakte Position des Objektes 3 bestimmt ist, es ist jedoch eine Raumrichtung bekannt, in welcher das Objekt 3 gegenüber dem Fahrzeug 1 und den akustischen Sensoren 2a, 2b befindlich ist. Ausgehend von dem Ursprung des Diagramms ist die Raumrichtung in diesem Falle eine Richtung entlang der X-Achse.

Eine zweite Kurve 21 beschreibt mögliche Positionen des Objektes 3, wenn eine geringe Verzögerung zwischen dem Empfangen des ersten Echos des Messsignals an dem ersten akustischen Sensor und dem Empfangen des zweiten Echos des Messsignals an dem zweiten akustischen Sensor 2b vorliegt. Es ist ersichtlich, dass sich der Verlauf der zweiten Kurve 21 mit steigendem Abstand zu dem Ursprung des Diagramms einer Geraden annähert, die ihren Ursprung in etwa in dem Ursprung des Diagramms hat. Somit kann die Raumrichtung für die zweite Kurve als eine Richtung ermittelt werden, die einer Lage dieser Geraden entspricht.

Die übrigen Kurven 22 bis 26 zeigen weitere mögliche Positionen des Objektes 3, wobei jede der Kurven 22 bis 26 jeweils eine Verzögerung m beschreibt. Die Verzögerung m entspricht einer Abweichung des Maximums in der ersten Kreuzkorrelationsfunktion von einem zentralen Punkt der ersten Kreuzkorrelationsfunktion über die Korrelationsdauer.

Nach dem sechsten Verfahrensschritt S6 wird ein siebter Verfahrensschritt S7 ausgeführt. In dem siebten Verfahrensschritt S7 erfolgt ein Bestimmen einer Zeitdauer zwischen dem Aussenden des Messsignals und dem Empfangen der Echos des Messsignals durch den ersten und/oder den zweiten akustischen Sensor. Dazu wird ein Punkt in dem ersten elektrischen Empfangssignal und/oder dem zweiten elektrischen Empfangssignal ermittelt, welcher ursächlich für das ermittelte Maximum in der ersten Kreuzkorrelationsfunktion ist. Die Zeitdauer wird bestimmt, indem eine zeitliche Differenz zwischen dem Aussenden des akustischen Messsignals und des Auftretens dieses Punktes in dem ersten elektrischen Empfangssignal und/oder dem zweiten elektrischen Empfangssignal ermittelt wird.

Nach dem siebten Verfahrensschritt S7 wird ein achter Verfahrensschritt S8 ausgeführt. In dem achten Verfahrensschritt S8 erfolgt ein Ermitteln eines Abstandes des Objektes 3 gegenüber den akustischen Sensoren 2a, 2b basierend auf der in dem siebten Verfahrensschritt S7 ermittelten Zeitdauer. Da eine Schallausbreitungsgeschwindigkeit bekannt ist, und beispielsweise als ein Parameter hinterlegt ist, wird aus der bestimmten Zeitdauer ein Abstand des Objektes 3 errechnet.

Mit Hinblick auf Figur 3 ist ersichtlich, dass mittels des ermittelten Abstandes ein eindeutiger Punkt auf den Graphen 20 bis 26 ermittelt werden kann. Es wird somit aus einer Kombination der Verzögerung m und dem Abstand des Objektes 3 auf eine exakte Position des Objektes 3 geschlossen.

Nach dem achten Verfahrensschritt S8 wird ein neunter Verfahrensschritt S9 ausgeführt. In dem neunten Verfahrensschritt S9 erfolgt ein Bestimmen einer Dopplerverschiebung des akustischen Messsignals basierend auf dem ersten und/oder zweiten elektrischen Empfangssignal. Die Dopplerverschiebung des akustischen Messsignals wird dabei durch einen Vergleich mit einem Referenzsignal bestimmt. Das Referenzsignal ist dabei ein Signal, welches das akustische Messsignal in unterschiedlichen Frequenzbereichen umfasst. Das erste elektrische Empfangssignal und/oder das zweite elektrische Empfangssignal werden mit dem Referenzsignal verglichen. Auf diese Weise wird ein Frequenzbereich ermittelt, in dem das erste Empfangsraum und/oder das zweite elektrische Empfangssignal liegt. Ein Frequenzunterschied zwischen einer ursprünglichen Frequenz des akustischen Messsignals und einer Frequenz des ersten elektrischen Empfangssignals und/oder des zweiten elektrischen Empfangssignals ist die Dopplerverschiebung des akustischen Messsignals.

Nach dem neunten Verfahrensschritt S9 wird ein zehnter Verfahrensschritt S10 ausgeführt. In dem zehnten Verfahrensschritt S10 erfolgt ein Ermitteln einer Relativgeschwindigkeit des Objektes 3 gegenüber den akustischen Sensoren 2a, 2b basierend auf der Dopplerverschiebung. Dabei wird auf eine Tabelle zurückgegriffen, in welcher einer Vielzahl möglicher Dopplerverschiebungen jeweils eine Relativgeschwindigkeit zugeordnet ist.

Zusammenfassend wird bei einem Durchlauf des erfindungsgemäßen Verfahrens in der ersten Ausführungsform somit eine genaue Position des Objektes 3 gegenüber dem Fahrzeug 1 sowie dessen Relativgeschwindigkeit gegenüber dem Fahrzeug 1 ermittelt.

Es sei darauf verwiesen, dass auch mehrere Maxima in der ersten Kreuzkorrelationsfunktion ermittelt werden können, da in einer realen Umgebung eine Reflexion des Messsignals an mehreren unterschiedlichen Objekten erfolgt. In diesem Falle wird das Verfahren für jedes der ermittelten Maxima ausgeführt, um eine Lage mehrerer Objekte zu ermitteln.

Nach dem zehnten Verfahrensschritt S10 verzweigt das Verfahren zurück auf den ersten Verfahrensschritt S1 und wird somit in einer Schleife wiederholt. Dies erfolgt, solange die akustische Messvorrichtung in Betrieb ist.

In einer zweiten Ausführungsform, welche im Wesentlichen der ersten Ausführungsform entspricht, wird die ersten Kreuzkorrelationsfunktion aus Teilabschnitten der ersten Kreuzkorrelationsfunktion zusammengefügt, wobei die Teilabschnitte eine geringere Korrelationsdauer aufweisen als die erste Kreuzkorrelationsfunktion.

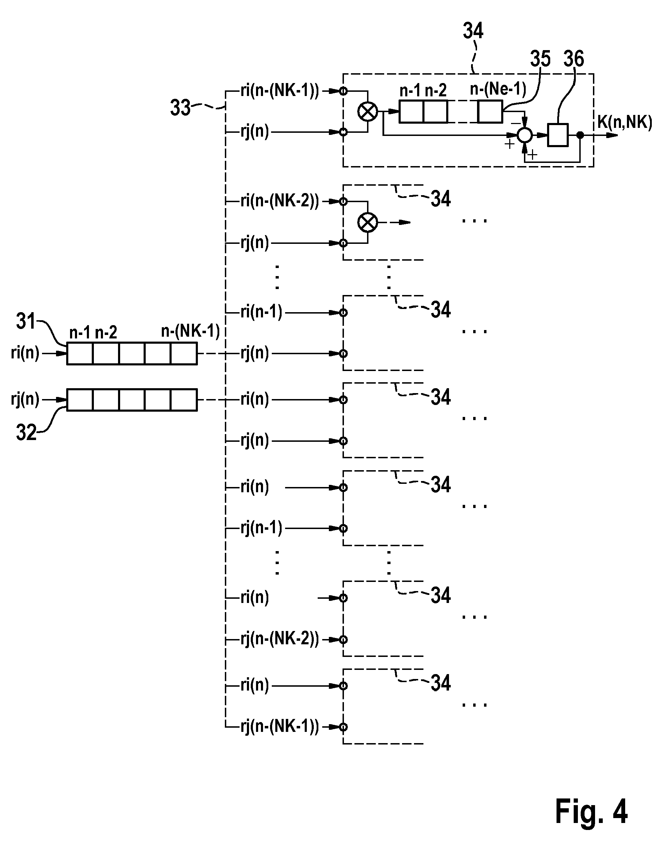

Eine vorteilhafte Vorrichtung zur Signalverarbeitung, welche dazu geeignet ist, Korrelationswerte der ersten Kreuzkorrelationsfunktion zu erzeugen, ist in Figur 4 gezeigt.

Mathematisch können Korrelationswerte der ersten Kreuzkorrelationsfunktion abhängig von einem zugehörigen diskreten Zeitpunkt n und der zugehörigen Verzögerung m durch die folgende erste Formel F1 dargestellt werden:

$$Kij\left(n,m\right) = \sum_{p=-Ne+1+n}^{n} ri(p) \cdot rj(p-m)\,\Big|_{m=-NK}^{m=NK} \qquad \text{(F1)}$$

Die zugrundeliegende erste Kreuzkorrelationsfunktion ist hierbei eine diskrete Funktion und das erste elektrische Empfangssignal und das zweite elektrische Empfangssignal werden entsprechend abgetastet, um ebenfalls diskrete Werte für das erste elektrische Empfangssignal und das zweite elektrische Empfangssignal zu erhalten. Dabei ist ri(n) das diskrete erste Empfangssignal und rj(n) das diskrete zweite Empfangssignal. Wie bereits ausgeführt, steht m für eine Verzögerung, also einen zeitlichen Versatz zwischen den beiden Empfangssignalen. NK ist eine Anzahl an Abtastwerten, welche für jedes der Empfangssignale erzeugt wurde.

Der Wert Ne repräsentiert die Integrationsdauer. Um einen Korrelationswert für einen Zeitpunkt n zu errechnen, wären somit (2 x NK+1) x Ne Multiplikation und Additionen notwendig. Um eine einfache Realisierung zu ermöglichen und einen Rechenaufwand zu vermindern, werden erfindungsgemäß zu jedem Zeitpunkt n die (2 x NK +1) Multiplikationsprodukte berechnet. Dieses wird in einem Stapelspeicher zwischengespeichert und zur Bildung eines Korrelationswertes für den folgenden Zeitpunkt n+1 erneut genutzt.

Die Multiplikationsprodukte ergeben sich aus einer zweiten Formel F2 zu:

$$Mij\,(n,m) = \mathrm{ri}\,(\mathrm{n}) \cdot rj(n-m)\,|\,{}^{m=NK}_{m=-NK} \qquad (\text{F2})$$

Betrachtet man einen Korrelationswert für den folgenden Zeitpunkt n+1, so kann dieser wie folgt durch die folgende dritte Formel F3 dargestellt werden:

$$Kij\,(n+1,m) =$$

$$\Big(ri(n+1) \cdot rj\big((n+1)-m\big)\Big) + \mathrm{Kij}\,(\mathrm{n,m}) - \Big(ri(n-Ne) \cdot rj\big((n-Ne)-m\big)\Big)\,|\,{}^{m\,=\,NK}_{m\,=\,-NK}$$

$$(\text{F3})$$

Es ist ersichtlich, dass der mittlere Summand gleich dem Korrelationswert zum Zeitpunkt n ist. Dieser muss lediglich mit den neu hinzugekommenen Multiplikationsprodukten beaufschlagt werden.

Die in Figur 4 gezeigte Vorrichtung weist einen ersten Stapelspeicher 31 und einen zweiten Stapelspeicher 32 auf. In dem ersten Stapelspeicher 31 werden die Abtastwerte ri(n) des ersten elektrischen Empfangssignals gespeichert. In dem zweiten Stapelspeicher 32 werden die Abtastwerte rj(n) des zweiten elektrischen Empfangssignals gespeichert. Dem ersten Stapelspeicher 31 und dem zweiten Stapelspeicher 32 werden kontinuierlich in jedem Taktzyklus neue Abtastwerte hinzugefügt. Die in Figur 4 gezeigte Vorrichtung errechnet alle Korrelationswerte für einen Zeitbereich, welcher eine Anzahl von NK Abtastwerten umfasst. Dazu fällt in jedem Taktzyklus, in dem ein neuer Abtastwert ermittelt wird, der jeweils älteste Abtastwert aus dem ersten und dem zweite Stapelspeicher 31, 32. Die entspricht dem sogenannten FIFO (first in, first out) Prinzip.

Die in den Stapelspeichern 31, 32 gepufferten Abtastwerte werden über ein BUSSystem 33 an eine Vielzahl von Korrelationswertbestimmungseinheiten 34 übertragen. Jede der Korrelationswertbestimmungseinheiten 34 ist dazu eingerichtet, jeweils einen Korrelationswert für eine bestimmte Verzögerung m an ihrem Ausgang bereitzustellen.

In jedem Taktzyklus werden bei einem Betrieb der Vorrichtung jeweils zwei Abtastwerte an jede der Korrelationswertbestimmungseinheiten 34 übertragen. Die Zuteilung erfolgt, wie in Figur 4 gezeigt. Die jeweils anliegenden Abtastwerte sind also derart gewählt, dass aus deren Multiplikation der jeweils erste Summand der dritten Formel F3 für die entsprechende Verzögerung m gebildet werden kann. Die Verzögerung m ergibt sich daraus, welche der Korrelationswertbestimmungseinheiten 34 betrachtet wird.

In jedem Taktzyklus wird durch jede der Korrelationswertbestimmungseinheiten 34 ein Multiplikationsprodukt aus den beiden anliegenden Abtastwerten gebildet. In jeder der Korrelationswertbestimmungseinheiten 34 wird das Multiplikationsprodukt aus jedem Taktzyklus in einem zugehörigen Stapelspeicher 35 zwischengespeichert. Das älteste Multiplikationsprodukt des jeweiligen Stapelspeichers 35 wird von einem Ausgangswert am Ausgang der zugehörigen Korrelationswertbestimmungseinheit 34 subtrahiert. Das in einem aktuellen Taktzyklus ermittelte Multiplikationsprodukt wird zugleich zu dem Ausgangswert der zugehörigen Korrelationswertbestimmungseinheit 34 addiert. Aus dieser Rechenoperation ergibt sich entsprechend der dritten Formel F3 ein neuer Ausgangswert der jeweiligen Korrelationswertbestimmungseinheit 34, welcher ein Korrelationswert für den aktuellen Zeitpunkt n und eine der Korrelationswertbestimmungseinheit 34 zugehörige Verzögerung m ist. Der Ausgangswert wird dazu in jeder Korrelationswertbestimmungseinheit 34 durch einen Ausgangsspeicher 36 vorgehalten.

Somit liegt an dem Ausgang jeder Korrelationswertbestimmungseinheit 34 jeweils ein Ausgangssignal an, welches jeweils einen Korrelationswert für einen Zeitpunkt n und alle möglichen Verzögerungen m wiedergibt. Ein Maximum kann aus einem Vergleich aller Korrelationswerte ermittelt werden.

In weiteren alternativen Ausführungsformen der Erfindung wird das erfindungsgemäße Verfahren, basierend auf den Empfangssignalen dreier akustischer Sensoren ausgeführt. Entsprechend werden mehrere Raumrichtungen, genauer gesagt drei Raumrichtungen ermittelt, welche die Lage des Objektes gegenüber dem akustischen Sensor beschreiben. Es werden somit drei Raumrichtungen bestimmt, die eine Lage des Objektes beschreiben. Auf diese Weise kann eine Lage des Objektes in einem dreidimensionalen Umfeld bestimmt werden. Ein dritter akustische Sensor könnte bspw. zentral zwischen dem ersten akustischen Sensor 2a und dem zweiten akustischen Sensor 2b, jedoch entlang einer Fahrzeughochachse des Fahrzeuges 1 versetzt zu diesem angeordnet sein.

Dabei erfolgt ein Empfangen eines dritten Echos des Messsignals mittels des dritten akustischen Sensors und ein Umsetzen des von dem dritten akustischen Sensor empfangenen dritten Echos des Messsignals in ein drittes elektrisches Empfangssignal, ein Erzeugen einer zweiten Kreuzkorrelationsfunktion, welche eine Korrelation zwischen dem ersten elektrischen Empfangssignal und dem dritten elektrischen Empfangssignal darstellt, ein Erzeugen einer dritten Kreuzkorrelationsfunktion, welche eine Korrelation zwischen dem zweiten elektrischen Empfangssignal und dem dritten elektrischen Empfangssignal darstellt, ein Ermitteln jeweils eines Maximums der ersten bis dritten Kreuzkorrelationsfunktion, und ein Ermitteln einer Raumrichtung, die eine Lage des Objektes gegenüber den akustischen Sensoren beschreibt, basierend auf einer Lage der Maxima der ersten bis dritten Kreuzkorrelationsfunktion.

In anderen alternativen Ausführungsformen werden mehrere akustische Messsignale ausgesendet und ausgewertet. Bevorzugt werden dabei solche akustischen Messsignale ausgesendet, die auf einfache Weise voneinander zu unterscheiden sind. So könnten die akustischen Messsignale bspw. jeweils eine individuelle Frequenz aufweisen. Um die akustischen Messsignale bei einer weiteren Auswertung voneinander zu unterscheiden, wird das durch den ersten akustischen Sensor und den zweiten akustischen Sensor empfangene reflektierte Messsignal jeweils durch einen Matched-Filter gefiltert.

Dabei erfolgen bei dem Aussenden des akustischen Messsignals ein Aussenden eines ersten Messsignals aus einer ersten Position und ein Aussenden eines zweiten Messsignals aus einer zweiten Position. Bei dem Empfang des ersten Echos des Messsignals mittels des ersten akustischen Sensors wird das empfangene erste Echo des Messsignals bezüglich des ersten Messsignals gefiltert, um das erste elektrische Empfangssignal zu beziehen und das empfangene erste Echo des Messsignals wird bezüglich des zweiten Messsignals gefiltert, um ein zusätzliches erstes elektrisches Empfangssignal zu beziehen. Bei dem Empfangen des zweiten Echos des Messsignals mittels des zweiten akustischen Sensors wird das empfangene zweite Echo des Messsignals bezüglich des ersten Messsignals gefiltert, um das zweite elektrische Empfangssignal zu beziehen und das empfangene zweite Echo des Messsignals wird bezüglich des zweiten Messsignals gefiltert, um ein zusätzliches zweites elektrisches Empfangssignal zu beziehen. Bei dem Erzeugen der ersten Kreuzkorrelationsfunktion erfolgt zusätzlich ein Erzeugen einer zusätzlichen ersten Kreuzkorrelationsfunktion, welche eine Korrelation zwischen dem zusätzlichen ersten elektrischen Empfangssignal und dem zusätzlichen zweiten elektrischen Empfangssignal darstellt. Die zusätzliche erste Kreuzkorrelationsfunktion wird entsprechend der ersten Kreuzkorrelationsfunktion erzeugt. Bei dem Ermitteln des Maximums der ersten Kreuzkorrelationsfunktion wird auch ein Maximum der zusätzlichen ersten Kreuzkorrelationsfunktion in entsprechender Weise ermittelt. Das Ermitteln der Raumrichtung erfolgt basierend auf einer Lage der Maxima in der ersten Kreuzkorrelationsfunktion und der zusätzlichen ersten Kreuzkorrelationsfunktion.

Neben obenstehender Offenbarung wird explizit auf die Offenbarung der Figuren 1 bis 4 verwiesen.

## Patentansprüche

1. Verfahren zum Ermitteln einer Lage eines Objektes umfassend:

   - Aussenden (S1) eines akustischen Messsignals,
   - Empfangen (S2) eines ersten Echos des Messsignals mittels eines ersten akustischen Sensors (2a) und ein Umsetzen des von dem ersten akustischen Sensor (2a) empfangenen ersten Echos des Messsignals in ein erstes elektrisches Empfangssignal,
   - Empfangen (S3) eines zweiten Echos des Messsignals mittels eines zweiten akustischen Sensors (2b) und ein Umsetzen des von dem zweiten akustischen Sensor (2b) empfangenen zweiten Echos des Messsignals in ein zweites elektrisches Empfangssignal,
   - Erzeugen (S4) einer ersten Kreuzkorrelationsfunktion, welche eine Korrelation zwischen dem ersten elektrischen Empfangssignal und dem zweiten elektrischen Empfangssignal darstellt,
   - Ermitteln (S5) eines Maximums der ersten Kreuzkorrelationsfunktion, und
   - Ermitteln (S6) einer Raumrichtung, die eine Lage des Objektes gegenüber den akustischen Sensoren (2a, 2b) beschreibt, basierend auf einer Lage des Maximums in der ersten Kreuzkorrelationsfunktion.

2. Verfahren gemäß Anspruch 1, ferner umfassend:

   - Bestimmen (S7) einer Zeitdauer zwischen dem Aussenden des Messsignals und dem Empfangen der Echos des Messsignals durch den ersten und/oder den zweiten akustischen Sensor (2a, 2b), und
   - Ermitteln (S8) eines Abstandes des Objektes gegenüber den akustischen Sensoren (2a, 2b) basierend auf der Zeitdauer.

3. Verfahren gemäß einem der vorhergehenden Ansprüche, **dadurch gekennzeichnet, dass** bei dem Erzeugen (S4) der ersten Kreuzkorrelationsfunktion eine Korrelationsdauer gewählt wird, die größer als eine Dauer des Messsignals ist.

4. Verfahren gemäß einem der vorhergehenden Ansprüche, **dadurch gekennzeichnet, dass** bei dem Erzeugen (S4) der ersten Kreuzkorrelationsfunktion diese aus Teilabschnitten der ersten Kreuzkorrelationsfunktion zusammengefügt wird, wobei die Teilabschnitte eine geringere Korrelationsdauer aufweisen als die erste Kreuzkorrelationsfunktion.

5. Verfahren gemäß einem der vorhergehenden Ansprüche, **dadurch gekennzeichnet, dass** eine Korrelationsdauer der ersten Kreuzkorrelationsfunktion abhängig von einer Laufzeit zwischen dem Aussenden des Messsignals und dem Empfangen der Echos des Messsignals durch den ersten und/oder den zweiten akustischen Sensor (2a, 2b) ist.

6. Verfahren gemäß einem der vorhergehenden Ansprüche, ferner umfassend:

   - Bestimmen (S9) einer Dopplerverschiebung des akustischen Messsignals basierend auf dem ersten und/oder zweiten elektrischen Empfangssignal, und
   - Ermitteln (S10) einer Relativgeschwindigkeit des Objektes gegenüber den akustischen Sensoren (2a, 2b) basierend auf der Dopplerverschiebung.

7. Verfahren gemäß Anspruch 6, **dadurch gekennzeichnet, dass** die Dopplerverschiebung des akustischen Messsignals durch einen Vergleich mit einem Referenzsignal bestimmt wird.

8. Verfahren gemäß einem der vorhergehenden Ansprüche, ferner umfassend:

   - Empfangen eines dritten Echos des Messsignals mittels eines dritten akustischen Sensors und Umsetzen des von dem dritten akustischen Sensor empfangenen dritten Echos des Messsignals in ein drittes elektrisches Empfangssignal,
   - Erzeugen einer zweiten Kreuzkorrelationsfunktion, welche eine Korrelation zwischen dem ersten elektrischen Empfangssignal und dem dritten elektrischen Empfangssignal darstellt,
   - Erzeugen einer dritten Kreuzkorrelationsfunktion, welche eine Korrelation zwischen dem zweiten elektrischen Empfangssignal und dem dritten elektrischen Empfangssignal darstellt,
   - Ermitteln jeweils eines Maximums in der ersten bis dritten Kreuzkorrelationsfunktion, und
   - ein Ermitteln einer Raumrichtung, die eine Lage des Objektes gegenüber den akustischen Sensoren beschreibt, basierend auf einer Lage der Maxima der ersten bis dritten Kreuzkorrelationsfunktion.

9. Verfahren gemäß einem der vorhergehenden Ansprüche, **dadurch gekennzeichnet, dass**

   - das Aussenden des akustischen Messsignals ein Aussenden eines ersten Messsignals aus einer ersten Position und ein Aussenden eines zweiten Messsignals aus einer zweiten Position umfasst,
   - bei dem Empfangen des erstem Echos des Messsignals mittels des ersten akustischen Sensors das empfangene erste Echo des Messsignals bezüglich des ersten Messsignals gefiltert wird, um das erste elektrische Empfangssignal zu beziehen und das empfangene erste Echo des Messsignals bezüglich des zweiten Messsignals gefiltert wird, um ein zusätzliches erstes elektrisches Empfangssignal zu beziehen,
   - bei dem Empfangen des zweiten Echos des Messsignals mittels des zweiten akustischen Sensors, das empfangene zweite Echo des Messsignals bezüglich des ersten Messsignals gefiltert wird, um das zweite elektrische Empfangssignal zu beziehen und das empfangene zweite Echo des Messsignals bezüglich des zweiten Messsignals gefiltert wird, um ein zusätzliches zweites elektrisches Empfangssignal zu beziehen,
   - bei dem Erzeugen der ersten Kreuzkorrelationsfunktion zusätzliche ein Erzeugen einer zusätzlichen ersten Kreuzkorrelationsfunktion erfolgt, welche eine Korrelation zwischen dem zusätzlichen ersten elektrischen Empfangssignal und dem zusätzlichen zweiten elektrischen Empfangssignal darstellt,
   - bei dem Ermitteln des Maximums der ersten Kreuzkorrelationsfunktion auch ein Maximum der zusätzlichen ersten Kreuzkorrelationsfunktion ermittelt wird, und
   - das Ermitteln der Raumrichtung basierend auf einer Lage der Maxima in der ersten Kreuzkorrelationsfunktion und der zusätzlichen ersten Kreuzkorrelationsfunktion erfolgt.

**10.** Akustische Messvorrichtung, die dazu eingerichtet ist, das Verfahren gemäß einem der vorhergehenden Ansprüche auszuführen.

Fig. 1

Fig. 2

Fig. 3

Fig. 4

Europäisches
Patentamt

European
Patent Office

Office européen
des brevets

# EUROPÄISCHER RECHERCHENBERICHT

Nummer der Anmeldung

EP 16 17 9609

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 808 699 A2 (HONDA MOTOR CO LTD [JP]) 3. Dezember 2014 (2014-12-03) * Absätze [0001], [0014], [0017] - [0020], [0023] - [0025], [0028], [0035], [0041], [0043], [0051], [0080], [0108] - [0113]; Abbildungen 1,2,10,16 * ----- | 1-10 | INV. G01S15/93 G01S15/10 G01S15/46 G01S15/58 G01S15/87 |
| Y | DE 44 06 525 A1 (SIEMENS AG [DE]) 7. September 1995 (1995-09-07) * Seite 2, Zeile 60 - Seite 8, Zeile 21; Abbildungen 1, 6-12 * ----- | 1-5,8-10 | ADD. G01S7/02 |
| Y | EP 1 464 988 A1 (MITSUBISHI ELECTRIC INF TECH [GB]; MITSUBISHI ELECTRIC CORP [JP]) 6. Oktober 2004 (2004-10-06) * Absätze [0001], [0007] - [0018], [0023] - [0024], [0029] - [0030]; Abbildungen 1, 2 * ----- | 1-10 | |
| Y | WO 00/39643 A1 (MITSUBISHI ELECTRIC INF TECH [GB]; SZAJNOWSKI WIESLAW JERZY [GB]; RATL) 6. Juli 2000 (2000-07-06) * Seite 8, Zeile 24 - Seite 13, Zeile 10; Abbildungen 1-8 * * Seite 1, Zeile 4 - Seite 2, Zeile 22 * ----- | 5 | RECHERCHIERTE SACHGEBIETE (IPC) G01S |
| A | EP 1 517 157 A1 (BOSCH GMBH ROBERT [DE]) 23. März 2005 (2005-03-23) * das ganze Dokument * ----- | 1,10 | |

Der vorliegende Recherchenbericht wurde für alle Patentansprüche erstellt

| Recherchenort | Abschlußdatum der Recherche | Prüfer |
|---|---|---|
| München | 3. Februar 2017 | Schmelz, Christian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 16 17 9609

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2017

| Im Recherchenbericht angeführtes Patentdokument | | Datum der Veröffentlichung | Mitglied(er) der Patentfamilie | | Datum der Veröffentlichung |
|---|---|---|---|---|---|
| EP 2808699 | A2 | 03-12-2014 | EP | 2808699 A2 | 03-12-2014 |
| | | | JP | 5798150 B2 | 21-10-2015 |
| | | | JP | 2014232070 A | 11-12-2014 |
| | | | US | 2014355385 A1 | 04-12-2014 |
| DE 4406525 | A1 | 07-09-1995 | DE | 4406525 A1 | 07-09-1995 |
| | | | EP | 0748454 A1 | 18-12-1996 |
| | | | JP | H09509742 A | 30-09-1997 |
| | | | US | 5761155 A | 02-06-1998 |
| | | | WO | 9523344 A1 | 31-08-1995 |
| EP 1464988 | A1 | 06-10-2004 | CN | 1536371 A | 13-10-2004 |
| | | | EP | 1464988 A1 | 06-10-2004 |
| | | | JP | 4803970 B2 | 26-10-2011 |
| | | | JP | 2004340942 A | 02-12-2004 |
| | | | US | 2004240322 A1 | 02-12-2004 |
| | | | US | 2006291332 A1 | 28-12-2006 |
| WO 0039643 | A1 | 06-07-2000 | AT | 346328 T | 15-12-2006 |
| | | | AU | 1882400 A | 31-07-2000 |
| | | | DE | 69934142 T2 | 20-09-2007 |
| | | | EP | 1145084 A1 | 17-10-2001 |
| | | | ES | 2277457 T3 | 01-07-2007 |
| | | | GB | 2345149 A | 28-06-2000 |
| | | | JP | 3706305 B2 | 12-10-2005 |
| | | | JP | 2002533732 A | 08-10-2002 |
| | | | JP | 2005249800 A | 15-09-2005 |
| | | | US | 6539320 B1 | 25-03-2003 |
| | | | WO | 0039643 A1 | 06-07-2000 |
| EP 1517157 | A1 | 23-03-2005 | DE | 10343175 A1 | 14-04-2005 |
| | | | EP | 1517157 A1 | 23-03-2005 |
| | | | US | 2005088334 A1 | 28-04-2005 |

EPO FORM P0461

Für nähere Einzelheiten zu diesem Anhang : siehe Amtsblatt des Europäischen Patentamts, Nr.12/82